Europäisches Patentamt

European Patent Office

Office européen des brevets

(11) Veröffentlichungsnummer: **0 235 797**
**B1**

(12) EUROPÄISCHE PATENTSCHRIFT

(45) Veröffentlichungstag der Patentschrift:
23.05.90

(51) Int. Cl.⁵: **F16D 1/02**

(21) Anmeldenummer: **87102989.8**

(22) Anmeldetag: **03.03.87**

(54) **Kupplung.**

(30) Priorität: **05.03.86 DE 3607140**

(43) Veröffentlichungstag der Anmeldung:
**09.09.87 Patentblatt 87/37**

(45) Bekanntmachung des Hinweises auf die Patenterteilung:
**23.05.90 Patentblatt 90/21**

(84) Benannte Vertragsstaaten:
**AT BE CH FR GB IT LI LU NL SE**

(56) Entgegenhaltungen:
**DE-A- 1 907 174**
**DE-A- 2 109 791**
**FR-A- 619 944**
**GB-A- 820 911**
**GB-A- 1 392 282**
**US-A- 3 995 448**

(73) Patentinhaber: **KSB Aktiengesellschaft,**
**Johann-Klein-Strasse 9, D-6710 Frankenthal(DE)**

(72) Erfinder: **Krauss, Arno, Ludwigshain 24,**
**D-6714 Weisenheim/Sand(DE)**

# Beschreibung

Die Erfindung betrifft eine Kupplung zur Verbindung zweier Wellenenden.

Derartige Kupplungen sind in den unterschiedlichsten Ausführungsformen bekannt und weisen die vielfältigsten Gestaltungen auf. So zeigt die GB-A-820 911 eine aus drei Hauptteilen bestehende elastische Kupplung, bei der zwischen einem äußeren und einem inneren Wellenteil ein oder mehrere elastische Elemente angeordnet sind. Mittels einer einstellbaren Verspannung zwischen den elastischen Elementen ist eine wählbare Dämpfungscharakteristik erhältlich. Die elastische Kupplung dient zur Kompensation von unterschiedlichen Belastungen zwischen den miteinander zu verbindenden Wellen.

Der Erfindung liegt die Aufgabe zugrunde, für Wellenenden gleichen oder unterschiedlichen Durchmessers eine einfach herzustellende, vielseitig verwendbare Kupplung zu entwickeln.

Die Lösung dieser Aufgabe erfolgt gemäß dem kennzeichnenden Teil des Hauptanspruches.

Indem die Kupplung aus einzelnen Blechscheiben zusammengefügt wird, kann in einfacher Weise eine Anpassung an die jeweils Verwendung findenden Wellendurchmesser erfolgen. Durch Bevorratung von einzelnen Blechscheiben mit unterschiedlichen Innendurchmessern läßt sich im jeweiligen Bedarfsfall die jeweils benötigte Kupplung zusammensetzen und das so gebildete Blechpaket durch Hilfsmittel zusammenhalten. Soll z. B. ein Motor, dessen Wellenenden mit einer Nut für eine Paßfeder versehen ist, mit der Welle einer Antriebsmaschine verbunden werden, deren Wellenende beispielsweise eine polygonale Außenkontur aufweist, so würde die zu verwendende Kupplung folgendermaßen gestaltet sein. In dem mit der Motorwelle in Verbindung kommenden Bereich würde der Innendurchmesser der einzelnen Blechscheiben einen vorstehenden Zapfen aufweisen, der paßgenau in die Nut der Motorwelle eingreifen kann und bei montierter Kupplung die Wirkung einer kräfteübertragenden Paßfeder besitzt. Der mit der Antriebswelle der Arbeitsmaschine in Berührung kommende Teil der Kupplung hätte demzufolge eine polygonale Kontur des Innendurchmessers, die eine Kräfteübertragung sicherstellen würde. Entsprechend der jeweiligen Wellenform könnte dies aber auch eine Paßfederverbindung sein, welche beispielsweise auf einem kleineren Durchmesser angeordnet wäre. Desweiteren kann eine Kontur Verwendung finden, die einer Verzahnung ähnelt und beispielsweise mit einer Keilwelle zusammenwirkt. Auch andere polygonale Konturen sind denkbar.

Eine weitere Ausgestaltung der Erfindung sieht vor, daß in die Blechscheiben eingeprägte Vertiefungen und/oder Vorsprünge eine Verdrehsicherung und/oder Drehmomentübertragung zwischen den einzelnen Blechscheiben gewährleistet.

Diese Vorsprünge, die beispielsweise mit einem Prägevorgang erzeugt werden können, greifen in die entsprechenden Vertiefungen der benachbarten Blechscheibe ein. Durch Normung dieser Vorsprünge ist über die gesamte Länge der Kupplung eine zuverlässige Drehmomentübertragung gewährleistet. Diese Vorsprünge werden vorteilhafterweise auf Durchmessern angeordnet, die ermöglichen, daß auch Blechscheiben mit unterschiedlichen Innendurchmessern kombiniert werden können. Aus Gründen der Unfallsicherheit könnte als Endscheibe eine Blechscheibe Verwendung finden, bei der keine Vorsprünge eingeprägt sind, sondern die mit Lochungen versehen ist, in die die vorletzte Blechscheibe mit ihren Vorsprüngen hineinragt.

Nach einer anderen Ausgestaltung der Erfindung durchdringen ein oder mehrere stabförmige Elemente die Kupplung in axialer Richtung und halten die paketförmig angeordneten Blechscheiben zusammen. Bei diesen Elementen kann es sich um vernietete Rundstäbe handeln, die durch entsprechende Lochungen der Blechscheiben hindurchgesteckt werden und die so gebildete Kupplung zusammenhalten. Ebensogut können hier auch Schraubenbolzen, Zugfedern, Spannhülsen oder dgl. Verwendung finden.

Eine weitere Ausgestaltung dieser Art sieht vor, daß ein ein- oder mehrteiliger Überzug die paketförmig angeordneten Blechscheiben zusammenhält. Die zusammengesetzte und entsprechend ausgerichtete Kupplung könnte also beispielsweise mit einem dünnen Blechmantel überzogen werden, der an den Endscheiben entsprechend umgebördelt ist. Desgleichen sind mehrere, über den Umfang verteilt angeordnete Zuganker verwendbar, die die Kupplung zusammenhalten. Auch kann der Überzug aus einem den Zusammenhalt sicherstellenden Elastomer bestehen.

Nach einer weiteren Ausgestaltung sind die paketförmig angeordneten Blechscheiben durch Schweißen, Löten, Kleben oder dgl. untereinander verbindbar. So wäre ein Verlöten oder Verkleben in Wärmeöfen bzw. in entsprechender Weise machbar. Oder über die äußeren Mantelfläche verteilt angeordnete, durchgehende Schweißnähte würden einen sicheren Zusammenhalt bewirken.

Eine andere Ausgestaltung der Erfindung sieht vor, daß im Bereich der einander gegenüberliegenden Wellenenden ein oder mehrere Winkelbewegungen ausgleichende Elemente zwischen den paketförmig angeordneten Blechscheiben angebracht sind. Somit würde für jedes Wellenende ein entsprechender Kupplungsteil zusammengesetzt werden. Die so gebildeten beiden Kupplungshälften sind dann in demjenigen Wellenbereich, in dem sich die beiden Wellenenden einander gegenüberliegen, durch Winkelbewegungen ausgleichende Elemente verbunden. Dies können elastisch nachgiebige Bauelemente metallischer oder nichtmetallischer Art sein.

Die Erfindung ist in den Ausführungsbeispielen dargestellt und wird im folgenden näher beschrieben. Es zeigen die

Fig. 1 einen Querschnitt durch eine derartige Kupplung, die

Fig. 2 eine stirnseitige Ansicht gemäß Fig. 1, die

Fig. 3 paketförmig angeordnete Blechscheiben mit drehmomentübertragenden Elementen, die

Fig. 4 die Kontur des Innendurchmessers einer einzelnen Blechscheibe, die

Fig. 5 ein durch einen Überzug zusammengehaltenes Blechpaket und die

Fig. 6 eine stirnseitige Ansicht der durch Schweißen zusammengehaltenen Kupplung.

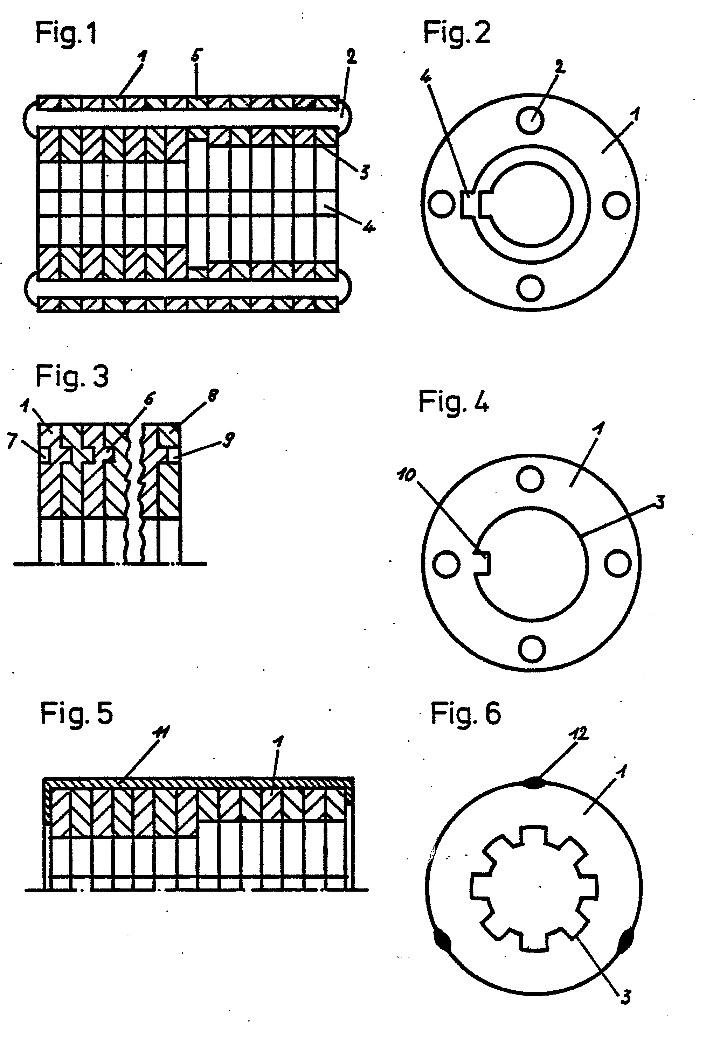

Die in der Fig. 1 gezeigte Kupplung dient zur Verbindung zweier Wellenenden unterschiedlichen Durchmessers. Die hier verwendeten vierzehn einzelnen Blechscheiben (1) weisen alle den gleichen Außendurchmesser sowie eine identische Lochung für Nietbolzen (2) auf. Der Innendurchmesser entspricht den jeweils zu verbindenden Wellendurchmessern. Die hier gezeigte Ausführungsform dient zur Verbindung von Wellenenden, die bereits mit Nuten zur Aufnahme einer Paßfeder versehen sind, so daß die innere Kontur (3) der einzelnen Blechscheiben mit einer rechteckigen Ausnehmung (4) zur Aufnahme der jeweiligen Paßfeder versehen ist. Für diejenigen Fälle, in denen ein genaues Ausstanzen der Innendurchmesser nicht möglich ist und die demzufolge nachgerieben werden müssen, findet ungefähr in der Mitte der Kupplung eine Blechscheibe (5) Verwendung, die insgesamt gesehen den grössten Innendurchmesser aufweist. Somit würde diese Blechscheibe (5) gewissermaßen einen Freischnitt für eine Reibahle gewährleisten, die den rechtsliegenden, grösseren Innendurchmesser aufweisenden Kupplungsteil bearbeitet.

Die Fig. 2 zeigt eine stirnseitige Ansicht der Kupplung gemäß Fig. 1. Nach dem Ausrichten der einzelnen Blechscheiben werden diese im ganzen als Paket zusammengepreßt und mittels der hindurchgesteckten Nietbolzen (2) vernietet und zusammengehalten.

Die Fig. 3 zeigt in einem halben Schnitt drei Blechscheiben (1), in die mehrere Zapfen (6) eingeprägt sind. Diese Zapfen (6) greifen in die entsprechenden Präglöcher (7) der benachbarten Blechscheibe ein und garantieren damit eine zuverlässige Drehmomentübertragung. Die hier rechts dargestellte Endscheibe weist anstelle der angeprägten Zapfen (6) eine Endscheibe (8) auf, in deren entsprechend angeordnete Lochungen (9) die Zapfen (6) eingreifen.

Die in der Fig. 4 gezeigte einzelne Blechscheibe (1) weist eine Kontur (3) des Innendurchmessers auf, die mit einem Vorsprung (10) versehen ist, der paßfederartig in eine entsprechende Nut der zu verbindenden Welle hineinragt. Bei dem Ausführungsbeispiel der Fig. 5 ist die erfindungsgemäße Kupplung mit einem Mantel (11) überzogen, der an den Stirnseiten umgebördelt wurde und somit den Zusammenhalt der Kupplung gewährleistet. Dieser Mantel (11) kann sowohl metallischer als auch nichtmetallischer Art sein und es ist auch ohne weiteres möglich, anstelle eines Mantels mehrere flache Zuganker zu verwenden.

Die Fig. 6 zeigt eine Blechscheibe (1), bei der die Kontur (3) des Innendurchmessers einer Verzahnung ähnelt und mit einer Vielkeilwelle zusammenwirkt. Den Zusammenhalt der einzelnen Blechscheiben bewirken am äußeren Umfang angebrachte, in axialer Richtung verlaufende Schweißnähte (12). Diese sind über den Umfang gleichmäßig verteilt angeordnet.

## Patentansprüche

1. Kupplung zum starren Verbinden zweier Wellenenden mit Hilfe eines Zwischenstückes, das über die beiden Wellenenden geschoben ist und im Bereich der die Wellenenden aufnehmenden Durchmesser drehmomentübertragende Konturen aufweist, dadurch gekennzeichnet, daß das Zwischenstück aus einzelnen Blechscheiben (1, 5, 8) besteht, die paketförmig angeordnet und mit Hilfsmitteln (2, 11, 12) zusammengehalten sind.

2. Kupplung nach Anspruch 1, dadurch gekennzeichnet, daß in die Blechscheiben (1, 5, 8) eingeprägte Vertiefungen (7, 9) und/oder Vorsprünge (6) eine Verdrehsicherung und/oder Drehmomentübertragung zwischen den einzelnen Blechscheiben gewährleisten.

3. Kupplung nach den Ansprüchen 1 und 2, dadurch gekennzeichnet, daß ein oder mehrere stabförmige Elemente (2) die Kupplung axial durchdringen und die paketförmig angeordneten Blechscheiben (1, 5, 8) drehmomentübertragend zusammenhalten.

4. Kupplung nach den Ansprüchen 1 bis 3, dadurch gekennzeichnet, daß ein ein- oder mehrteiliger Überzug (11) die paketförmig angeordneten Blechscheiben (1, 5, 8) zusammenhält.

5. Kupplung nach den Ansprüchen 1 bis 4, dadurch gekennzeichnet, daß die paketförmig angeordneten Blechscheiben (1, 5, 8) durch Schweißen, Löten, Kleben oder dgl. untereinander verbindbar sind.

6. Kupplung nach den Ansprüchen 1 bis 5, dadurch gekennzeichnet, daß im Bereich der einander gegenüberliegenden Wellenenden ein oder mehrere Winkelbewegungen ausgleichende Elemente zwischen den paketförmig angeordneten Blechscheiben angebracht sind.

## Claims

1. A coupling for the connection together of two shaft ends with the aid of an intermediate member, which is slipped over the two shaft ends and at the diameter accepting the shaft ends has torque-transmitting surface structures, characterized in that the intermediate member consists of individual sheet metal disks (1, 5 an 8), which are arranged in the form of a stack and are held together with auxiliary means (2, 11 and 12).

2. The coupling as claimed in claim 1, characterized in that recesses (7 and 9) and/or projections (6) pressed into the sheet metal disks (1, 5 and 8) ensure the absence of rotary slip and/or the transmission of torque between the individual sheet metal disks.

3. The coupling as claimed in claims 1 and 2, characterized in that one or more rod-like elements (2) extend axially through the coupling and hold the sheet metals disks (1, 5 and 8) together in a torque-transmitting manner, which are arranged in the form of a stack.

4. The coupling as claimed in any one of the claims 1 through 3, characterized in that a cover (11) in one or more parts holds the sheet metal disks (1, 5 and 8) together which are arranged in the form of a stack.

5. The coupling as claimed in any one of the claims 1 through 4, characterized in that the sheet metal disks (1, 5 and 8) arranged in the form of a stack are able to be connected by welding, soldering, adhesive bonding or the like with each other.

6. The coupling as claimed in any one of the claims 1 through 5, characterized in that at the mutually opposite shaft ends one or more elements to allow for angular displacement are provided arranged between the sheet metal disks arranged in the form of a stack.

**Revendications**

1. Dispositif d'accouplement pour l'assemblage rigide de deux extrémités d'arbre à l'aide d'une pièce intermédiaire qui est glissée sur les deux extrémités de l'arbre et qui présente dans la zone des diamètres qui reçoivent les extrémités de l'arbre des contours transmettant les couples caractérisé en ce que la pièce intermédiaire est composée de divers disques de tôle (1, 5, 8) placés en paquet et retenus ensemble grâce à des éléments auxiliaires (2, 11, 12).

2. Dispositif d'accouplement selon la revendication 1 caractérisé en ce que, dans les disques de tôle (1, 5, 8), des empreintes en creux (7, 9) et/ou des parties en saillie (6) assurent l'arrêt en torsion et/ou la transmission des couples entre les disques de tôle.

3. Dispositif d'accouplement selon les revendications 1 et 2 caractérisé en ce que un ou plusieurs éléments (2) en forme de barres percent axialement le dispositif d'accouplement et maintiennent ensemble les disques de tôle (1, 5, 8) ordonnés en paquet tout en transmettant les couples.

4. Dispositif d'accouplement selon les revendications 1 à 3 caractérisé en ce qu'un élément de revêtement (11) constitué d'une ou de plusieurs pièces maintient ensemble les disques de tôle (1, 5, 8) ordonnés en paquet.

5. Dispositif d'accouplement selon les revendications 1 à 4 caractérisé en ce que les disques de tôle (1, 5, 8) ordonnés en paquet peuvent être reliés entre eux par soudage, brasage, collage ou autre technique semblable.

6. Dispositif d'accouplement selon les revendications 1 à 5 caractérisé en ce que, dans la zone des extrémités des arbres se faisant face, sont situés un ou plusieurs éléments de compensation des mouvements angulaires, entre les disques de tôle ordonnés en paquet.

EP 0 235 797 B1

Fig.1

Fig.2

Fig. 3

Fig. 4

Fig. 5

Fig. 6